# EUROPÄISCHE PATENTSCHRIFT

(11) **EP 2 469 136 B1**
(45) Veröffentlichungstag und Bekanntmachung des Hinweises auf die Patenterteilung: **19.08.2015**
(21) Anmeldenummer: 10196422.9
(22) Anmeldetag: 22.12.2010
(51) Int. Cl.: F16K 15/06, F16K 29/00

(54) **Rückschlagventil mit optimiertem Schließelement**
Check valve with optimised closing element
Soupape de retenue doté d'un élément de fermeture optimisé

(43) Veröffentlichungstag der Anmeldung: 27.06.2012
(73) Patentinhaber: Georg Fischer Rohrleitungssysteme AG, 8201 Schaffhausen (CH)
(72) Erfinder: Miklo, Jürgen, 8240, Thayngen (CH); Roost, Markus, 8197, Rafz (CH); Barbone, Riccardo, 8200, Schaffhausen (CH)
(74) Vertreter: Fenner, Seraina

(56) Entgegenhaltungen:
- EP-A1- 0 436 214
- DE-U1- 8 303 011
- GB-A- 1 115 993
- US-A- 5 117 861
- US-A1- 2010 269 928

## Beschreibung

Die Erfindung betrifft ein Rückschlagventil beinhaltend ein Ventilgehäuse in welchem sich ein einteiliges Schliesselement befindet, das durch das Durchflussmedium verschiebbar angeordnet ist und in der Schliessstellung an einer Profildichtung einer Dichtpartie anliegt, welches durch eine Lagerung geführt ist, wobei die Lagerung durch Rippen konzentrisch im Ventilgehäuse angeordnet und befestigt ist, wobei das Schliesselement (3) eine Zone A (34), in der die Aussenkontur eine strömungsoptimierte Form und eine Zone B (35) in der die Aussenkontur eine Kalottenform aufweisen, beinhaltet und die Zone A (34) und B (35) hintereinander angeordnet sind und fliessend ineinander übergehen.

Ein Rückschlagventil ist dazu da, die Strömungsrichtung eines gasförmigen oder flüssigen Mediums innerhalb einer Rohrleitung zu bestimmen. Sie werden in Gas-, Wasser- oder dergleichen Versorgungsleitungen eingesetzt, um eine Rückströmung des Mediums entgegen der regelmässigen Durchströmungsrichtung zu verhindern. Das Rückschlagventil hat somit die Funktion den Durchgang eines Mediums in entgegen gesetzter Strömungsrichtung oder auch bei ausbleibendem in Strömungsrichtung fliessendem Medium selbsttätig zu sperren.

Aus dem Stand der Technik sind meist Rückschlagventile bekannt, die als Schliesselement eine Kugel aufweisen da sie eine optimale Dichtheit in der Schliessstellung gewähren. Nachteilig an solchen Rückschlagventilen ist, dass beim Öffnen des Ventils sofort ein grosser Durchflussquerschnitt entsteht, wodurch Turbulenzen auftreten und Vibrationen entstehen lassen auftreten und die Kugel die als Schliesselement dient hin und her geschlagen wird. Dadurch entstehen Abnützungen sowie Materialausbrüche am Schliesselement, wodurch auf längere Zeit keine einwandfreie Dichtwirkung in der Schiessstellung gewährleistet ist. Zudem verunreinigen die Abnützungen und Materialausbrüche das Medium und es kann dadurch zu Schäden am Rohrleitungssystem selbst, an angeordneten Ventilen, Pumpen oder Armaturen führen.

Eine Kugel als Schliesselement, bringt neben der gewünschten Eigenschaft der bestmöglichen Abdichtung durch ihre Form und die dadurch optimale Anschmiegung an die Dichtung, auch unerwünschte Vibrationen sowie ein Schlackern der Kugel, wodurch die hohe Lärmentwicklung entsteht, mit sich.

Eine weitere ungewollte Eigenschaft die durch eine Kugel als Schliesselement entsteht ist der labile Durchflusskoeffizient, welcher als Mass für den erzielbaren Durchfluss eines Mediums durch ein Ventil dient.

Ein weiterer Nachteil bei einem Rückschlagventil mit einer Kugel, ist die ungünstige bzw. in den meisten Fällen kaum mögliche Erweiterung des Ventils durch eine einbaubare Feder. Durch eine im Ventil eingebaute Feder wird ein Federdruck auf das Schliesselement bzw. die Kugel ausgeübt und somit durch eine zusätzliche Druckkraft die durch die Feder erzeugt wird optimal geschlossen. Allerdings ist bei Rückschlagventilen mit Kugeln als Schliesselement ein nachträglicher Einbau einer Feder kaum möglich, da keine Auflageflächen für die Feder am Schliesselement sowie im Gehäuse vorhanden sind, somit müsste für eine Federausführung eines Rückschlagventils, ein spezielles Ventilgehäuse und ein angepasstes Schliesselement hergestellt werden, was wiederum mit zusätzlichen Kosten verbunden wäre.

Die DE83 03 011 U1, EP 0 436 214, US 5 117 861, GB 1 115 993 und US 20100269928 A1 offenbaren Rückschlagventile die in verschiedenen Bereichen einsetzbar sind. Die meisten von ihnen offenbaren ein Gehäuse und eine Lagerung die mehrteilig ist mit einem im Gehäuse angeordneten Schliesselement.

Die EP 0 047 055 B1 offenbart ein Ventil, dass eine aus elastischem Kunststoff hergestellte Kugel aufweist, welche durch eine Feder in ein konusförmiges Organ gedrückt wird und das wiederum mit dem grösseren Durchmesser des kegelstumpfförmigen Aussenmantels dichtend gegen die konusförmige Bohrung gedrückt wird, wobei die elastische Kugel zudem an die konusförmige Bohrung gedrückt wird und dadurch eine weitere Abdichtung herzustellen.

Nachteilig an einer solchen Variante sind die vielen Einzelteile und somit die hohen Produktionskosten, zudem lässt sich eine Kugel ohne Naht bzw. Anspritzpunkt oder sonstige Unregelmässigkeiten, egal aus welchem Werkstoff durch mechanische Bearbeitung wie bspw. Drehen herstellen oder muss zumindest mechanisch überarbeitet werden, ansonsten würde sich die Kugel erheblich unruhiger im Ventil verhalten.

Es ist Aufgabe der Erfindung ein Rückschlagventil vorzuschlagen welches einen verbesserten Durchflusskoeffizienten sowie dessen Konstanz und eine optimale Dichtigkeit gewährt, zudem sollen unerwünschte Vibrationen des Schliesselements vermieden und demzufolge die Lärmentwicklung gesenkt werden.

Diese Aufgabe wird erfindungsgemäss dadurch gelöst, dass Zone C durch einen Radius an Zone B anschliesst, wobei der Radius gegen Zonenende in eine Gerade über geht, die als Strömungsleitelement dient.

Durch die strömungsoptimierte Kontur in Zone A wird ein möglichst geringer Widerstand in der Leitung bzw. im Ventil verursacht, was wiederum einen sehr guten Durchflusskoeffizienten realisiert. Die strömungsoptimierte Form der Aussenkontur in Zone A weist an der Spitze bzw. in Front des Schliesselements einen Radius auf durch den sich die Strömung von selbst völlig gleichmässig aufteilt. Der Umfang bzw. Durchmesser der Aussenkontur in Zone A vergrössert sich in Durchflussrichtung bis die Zone A in Zone B übergeht, so dass eine laminare Strömung gewährleistet ist. Die Kurve der Zone A schiesst tangential an die Kalotte in Zone B an.

Eine bevorzugte Ausführung besteht darin die Aussenkontur der Zone A des Schliesselements konische auszubilden, was eine Vereinfachung in der Herstellung erlaubt und gleichzeitig eine optimale Strömung im Ventil bzw. einen geringen Widerstand bewirkt.

In der Zone B verändert sich die Aussenkontur in die Form einer Kalotte. Die Kurve der Zone A schliesst somit tangential an die Aussenkontur einer Kugel bzw. Kalotte an. Die Form der Kugel bzw. Kalotte gewährt dem Rückschlagventil die bestmögliche Abdichtung, allerdings ist sie zur Widerstandsminimierung während des Durchflusses bzw. des geöffneten Ventils nicht zu bevorzugen, das heisst, eine Kugel die als Schliesselement eingesetzt wird, verursacht durch ihre Form welche in Front des Schliesselements nicht in eine abgerundete Spitze verläuft bzw. strömungstechnisch nicht optimiert ist, einen sehr hohen Widerstand in der Strömung während des geöffneten Ventils, deshalb ist erfindungsgemäss in Richtung Ventileinlass die widerstandsminimierte Kurve bzw. Aussenkontur der Zone A vor die Kugelform bzw. Kalottenform in Zone B gesetzt und tangential miteinander verbunden.

Im weiteren Profilverlauf des Schliesselements folgt die Zone C, welche im Anschluss an die Kugelform bzw. Kalottenform von Zone B einen Radius aufweist, der gegen Zonenende in eine kurze Gerade übergeht, die als Strömungsleitelement dient, womit Wirbelbildungen stark minimiert werden, sodass das Schlackern und Vibrieren stark reduziert wird. Ein weiterer wichtiger Effekt der durch das Strömungsleitelement erzielt wird, ist die Reduktion der Verwirbelungen in der Strömung hinter der Zone C, wodurch das Schliesselement eine stabilere Lage in der Strömung, auch in horizontaler Einbaurichtung, einnimmt und auf diese Weise der Durchflusskoeffizient konstant gehalten wird.

Der zylinderförmige Schaft des Schliesselements der an Zone C anschliesst dient als Führung, wodurch es sich dem Schliesselement verunmöglicht sich zu wenden oder in Strömungsrichtung zu rotieren. Die Führung des Schliesselements wird durch eine Lagerung welche im Ventilgehäuse vorgesehen ist formschlüssig geführt und dadurch stabilisiert. Die Führung des Schliesselements kann zusätzlich als Federführung genutzt werden, falls eine Feder erwünscht oder benötigt wird.

Über die Führung des Schliesselements erstrecken sich Führungsrippen, damit die Führung des Schliesselements nur über die Rippen an der Lagerung im Ventilgehäuse anliegt und nicht am gesamten Umfang der Führung des Schliesselements. Dadurch werden allfällige Schmutzpartikel durch das Ventil bzw. die Lagerung im Ventilgehäuse hindurch gespült und ein Verstopfen des Ventils bzw. ein Verklemmen des Schliesselements im Führungsbereich durch die Ansammlung von Schmutz, verhindert oder minimiert. Denkbar sind jedoch auch andere Ausführungsformen von Führungen.

Durch eine Federauflagefläche an der Lagerung im Ventilgehäuse besteht die Möglichkeit ein Rückstellelement vorzugsweise eine Feder in das Ventil einzubauen um ein sicheres Schliessen durch das Ventil auch in horizontaler Einbaulage zu garantieren. Dadurch dass das Ventil auch in horizontaler Lage eingebaut werden kann, befindet sich das Schliesselement ohne Feder und bei ausbleibender Strömung in einer undefinierten Lage. Durch den Einbau einer Feder wird das Schliesselement an die Profildichtung gepresst.

Auch bei Materialen des Schliesselements die eine geringe spezifische Dichte aufweisen und somit durch ihr Eigengewicht das Ventil in vertikaler Einbaurichtung nur schlecht schliessen, ist eine Feder von Vorteil und kann bei einer solchen Ventilbauweise problemlos auch nachträglich eingebaut werden, ohne die bestehenden Teile wie Gehäuse oder Schliesselement auszuwechseln. Das verringert die Herstellkosten, da für beide Ausführungsvarianten, mit und ohne Feder, dieselben Teile verwendet werden können.

Ein weiterer Vorteil bei einem Ventil mit einem Schliesselement mit einer Aussenkontur wie in der vorliegenden Erfindung besteht darin, dass bei einer Kunststoffausführung des Schliesselements der Anspritzpunk sowie die Naht der Trennstelle an einer Stelle gewählt werden kann an der sie keinen Einfluss auf die Strömung haben, bspw. am Ende der Führung.

Eine bevorzugte Ausführungsform besteht darin, am Umfang, im Bereich der strömungsförmig optimierten Mantelfläche der Zone A, Schaufeln anzubringen, die eine Rotation des Schliesselements, während des durchströmenden Mediums durch das Rückschlagventil, erzeugen. Das wiederum ermöglicht dem Rückschlagventil sich selbst zu reinigen und die Schmutzpartikel hindurch zu fördern. Da das Schliesselement in den meisten Fällen im Medium schwebt und nicht an der Anschlagfläche der Lagerung des Ventilgehäuses ansteht, ist die erzeugte Rotation ein effizientes Reinigungsverfahren das konstant autonom abläuft.

Eine weitere Möglichkeit der Ausgestaltung besteht darin, dass die Führungsrippen an der Führung des Schliesselements einen spiralförmigen Verlauf aufweisen, womit die Rotation unterstützt und die Schmutzpartikel herausgefördert werden.

Ausführungsbeispiele der Erfindung werden anhand der Figuren beschrieben, wobei sich die Erfindung nicht nur auf die Ausführungsbeispiele beschränkt. Es zeigen:
- Fig. 1: einen Längsschnitt eines Rückschlagventil in geöffnetem Zustand,
- Fig. 2: eine Schnittansicht durch das Ventilgehäuse,
- Fig. 3: eine räumliche Ansicht eines Rückschlagventils mit einem Längsausschnitt in geschlossener Stellung,
- Fig. 4: einen Längsschnitt eines Rückschlagventils mit Feder in geschlossener Stellung,
- Fig. 5: eine Ansicht des Schliesselements unterteilt in die jeweiligen Zonen und
- Fig. 6: einen Grundriss und eine Seitenansicht einer Ausführungsvariante eines Schliesselements.

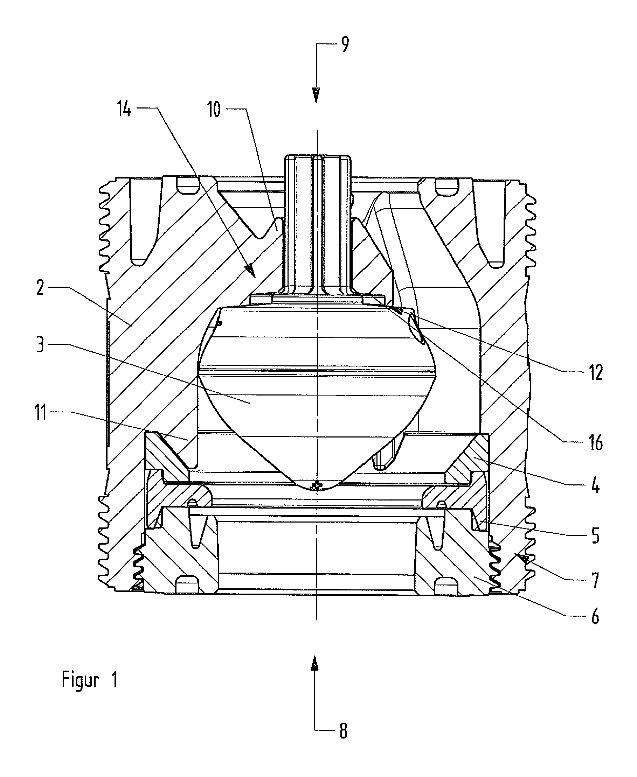

Das Rückschlagventil 1 in Fig. 1 weist ein Ventilgehäuse 2 auf in welchem sich ein Schliesselement 3 zur Durchflussregelung befindet, das heisst, das Schliesselement verunmöglicht dem Medium einen Rückfluss und gewährt ihm den Durchfluss nur in eine Richtung. Das Rückschlagventil 1 wird von einer Strömung in Pfeilrichtung 8 durchströmt, wodurch das Schliesselement 3 in geöffneter Stellung verweilt. Auf der Einströmungsseite des Ventils 1 befindet sich die Dichtpartie 7, welche bei einem geschlossenen Rückschlagventil 1 die Dichtheit gewährt. Die Dichtpartie 7 setzt sich aus einer Profildichtung 5, einem Stützring 4 und einem Einschraubteil 6 zusammen. Wobei die Profildichtung 5 zwischen dem Stützring 4 und dem Einschraubteil 6 fest eingespannt ist. Das Einschraubteil 6 ist in das Ventilgehäuse 2 eingeschraubt und wird festgezogen bis der Stützring 4 am Ventilgehäuse 2 ansteht. Das Schliesselement 3 wird über die Lagerung 10, welche konzentrisch im Ventilgehäuse 2 über die Rippen 11 fixiert und positioniert ist, geführt. Zur Fixierung der Lagerung 10 im Ventilgehäuse 2 dienen idealer Weise drei gleichmässig entlang des Umfangs verteilte Rippen 11, vorstellbar sind allerdings auch mehr als drei Rippen 11, jedoch wird dann unerwünschter Weise der Strömungswiderstand erhöht. Die Lagerung 10 weist eine Anschlagfläche 12 auf, an welcher das Schliesselement 3 in geöffnetem Zustand ansteht. Zudem weist die Lagerung 10 eine Auflagefläche 16 die leicht vertieft gegenüber der Anschlagfläche 12 ist auf. Die Fläche 16 dient der Auflage einer Feder 15, die nach Bedarf einbaubar ist. Falls das Medium in Strömungsrichtung 8 ausbleibt, fällt das Schliesselement 3 in die Schliessstellung und verhindert ein Rücklaufen 9 des Mediums.

Vorzugsweise sind die Teile aus Kunststoff hergestellt, denkbar sind jedoch auch andere Materialien wie Kupfer, Stahl, Messing, usw.

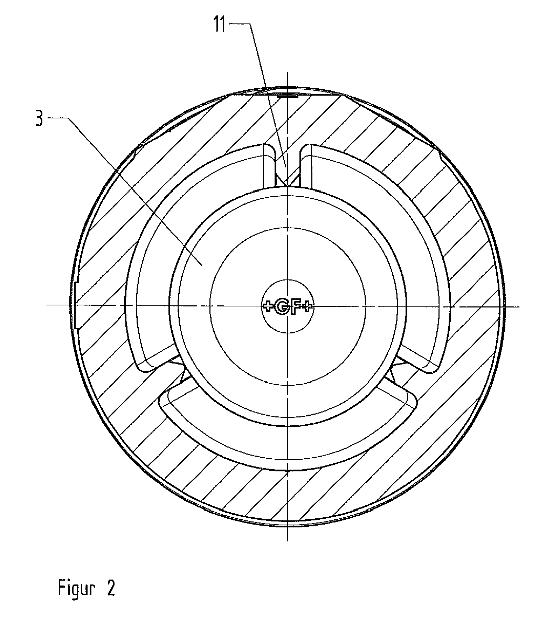

Die Rippen 11 über welche die Lagerung 10 am Ventilgehäuse 2 befestigt ist, dienen zudem als Führung des Schliesselements 3, was in Fig. 2 ersichtlich ist. Dadurch wird ein Abknicken während des Verschiebens des Schliesselements 3 verunmöglicht.

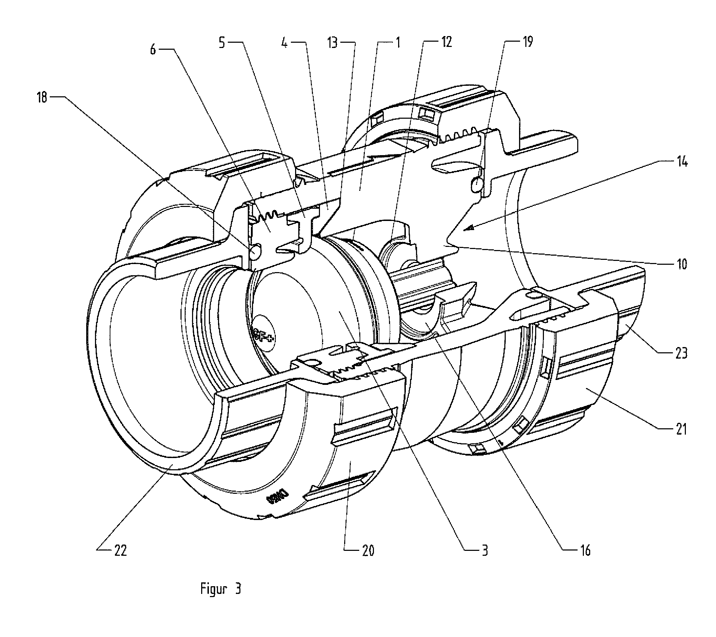

Das Ventilgehäuse 2 ist an beiden Enden mit Aussengewinden versehen auf welche Überwurfmuttern 20, 21 geschraubt werden. Mittels der Überwurfmutter 20, 21 wird ein Anschlussteil 22, 23 gegen einen O-Ring 18, 19 gepresst, der sich stirnseitig im Einschraubteil 6 bzw. stirnseitig im Ventilgehäuse 2 auf der Abgangsseite befindet. Das Einschraubteil 4 wird über das im Ventilgehäuse 2 angeordnete Innengewinde eingeschraubt, wodurch der Stützring 4 über die Profildichtung 5 gegen die Stirnfläche 13 des Ventilgehäuses 2 gedrückt wird. In Fig. 3 befindet sich das Schliesselement 3 in geschlossener Stellung. Das Schliesselement 3 drückt mit dem Radius der Kugelform bzw. Kalottenform der Zone B 35 auf die Profildichtung 5, zur Stabilisation der Profildichtung 5 dient das Einschraubteil 6, damit bei zu hohem Druck der auf das Schliesselement 3 wirkt, die Profildichtung 5 nicht nachgeben und das Schliesselement 3 nicht hindurch gleiten kann.

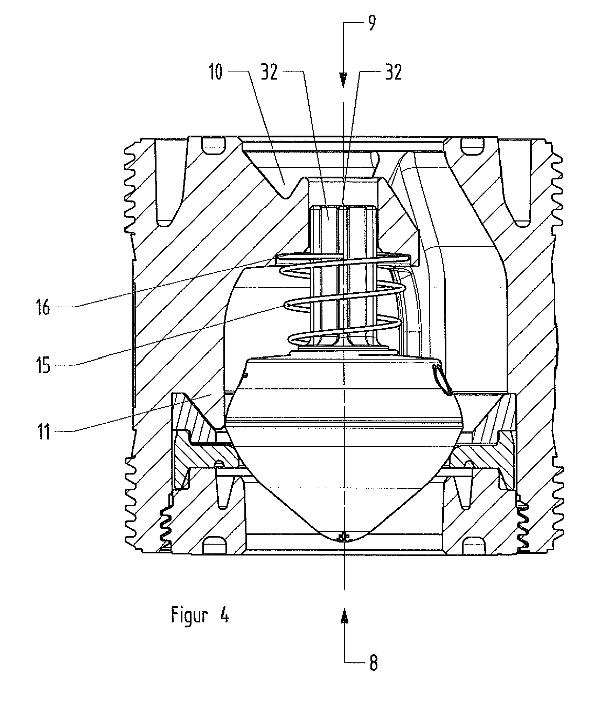

Fig. 4 zeigt ein Rückschlagventil 1 bei welchem eine Feder 15 eingesetzt ist, um beispielsweise bei horizontalem Einbau des Ventils 1 trotzdem eine sichere Abdichtung zwischen Schliesselement 3 und Profildichtung 5 zu erzielen. Durch die Feder 15 wird ein Druck auf das Schliesselement 3 ausgeübt, wodurch das Ventil 1 geschlossen ist, bis eine Strömung auftritt, die genügend Druck in Strömungsrichtung 8 erzeugt, um den Gegendruck der Feder 15 zu überwinden. Eine solche Feder 15 ist auch dann sinnvoll einzubauen, wenn das verwendete Material des Schliesselements 3 ein niedriges spezifisches Gewicht aufweist und nur durch das Eigengewicht das Ventil 1 nicht ausreichend geschlossen werden kann. Die Führung 32 des Schliesselements 3 dient zudem als Führung der Feder 15, die an der Auflagefläche 16 ansteht. An der Führung 32 sind vier Führungsrippen 33 angeordnet, wobei auch eine andere Anzahl von Führungsrippen 33 denkbar ist. Auf diese Weise liegt die Führung 32 nicht am gesamten Umfang in der Lagerung 10 an, sondern nur über die Führungsrippen 33, dadurch kann die Reibung wesentlich vermindert werden und das Schliesselement 3 wird trotzdem konzentrische gegenüber dem Ventilgehäuse 2 geführt, wobei auch andere Ausführungen von Führungen denkbar sind.

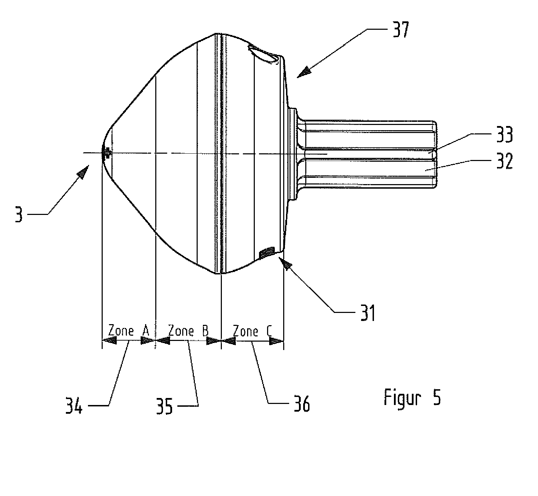

Um die gewünschte Durchflussmenge bzw. den gewünschten Durchflusskoeffizienten zu erreichen und konstant zu halten, sowie die erforderte Dichtheit zu erzielen, setzt sich die Aussenkontur des Schliesselements 3 aus unterschiedlichen Zonen zusammen, die in Fig. 5 dargestellt sind. Zone A 34 weist eine strömungsoptimierte Aussenkontur auf, wobei die Aussenkontur in Zone A 34 auch konisch verlaufen kann. Die Kurve ist so ausgeformt, dass der Widerstand im Ventil 1 minimal ist und das Ventil 1 dadurch sehr gute strömungstechnische Werte erzielt.

An die Kurve der Zone A 34 schliesst die Kugelform bzw. Kalottenform der Zone B 35 an, die zur optimalen Abdichtung des Rückschlagventils 1 dient. Durch die Aneinanderreihung der Geometrien ist sowohl die Dichtheit in der geschlossenen Stellung gegeben, sowie auch ein minimaler Strömungswiderstand während des geöffneten Ventils 1 der durch die Zone A 34 erreicht wird. In Zone C 36 die an Zone B 35 anschliesst, geht ein Radius, der nicht dem Kugelradius von Zone B 35 entsprechen muss, in eine Gerade über, die nicht tangential zum Radius verläuft, wodurch ein Strömungsleitelement 31 entsteht. Das Strömungsleitelement 31 bewirkt eine stabilere Lage des Schliesselements 3, das heisst der Durchflusskoeffizient bzw. das Durchflussvolumen bleibt konstant. Der Einsatz des Strömungsleitelements 31 vermindert die Verwirbelungen und somit auch eine Verminderung des Gegendrucks der auf die Auflagefläche 37 des Schliesselements 3 wirkt. Durch die Aussenkontur des Schliesselements 3, die sich aus einer strömungsoptimierten Kurve, einer optimal abdichtenden Kugelform bzw. Kalottenform und einem Strömungsleitelements zusammensetzt, werden die Vibrationen vermindert, der Durchflusskoeffizient konstant gehalten, der Lärm reduziert und zudem ist eine Erweiterung des Rückschlagventils durch eine Feder problemlos umsetzbar.

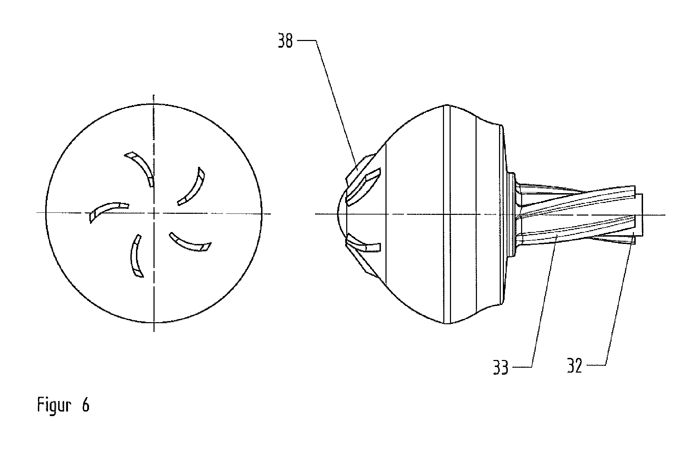

In Fig. 6 wird eine Ausführungsform eines Schliesselements 3 gezeigt, der im Bereich der Zone A 34 Schaufeln 38 entlang des Umfangs der strömungsoptimierten Aussenkontur aufweist. Die Schaufeln 38 sind entlang des Umfangs gleichmässig verteilt. In der abgebildeten Ausführung weist das Schliesselement 3 fünf Schaufeln 38 auf, denkbar ist auch eine andere Anzahl von Schaufeln 38. Die Schaufeln 38 beinhalten eine leichte Krümmung, was hilfreich bei der Rotationserzeugung ist, die durch das in Strömungsrichtung 8 durchfliessende Medium entsteht. Der Effekt der Rotation des Schliesselements 3 dient der Selbstreinigung des Rückschlagventils 1. Durch die Rotation werden die Schmutzpartikel aus der Dichtpartie 7 und der Führungspartie 14 gelöst. Dadurch dass das Schliesselement 3 im Normalfall im durchströmenden Medium schwebt und nur in wenigen Fällen an der Anschlagfläche 12 anliegt, was eine Rotation des Schliesselements 3 erschweren würde, ist dieser Effekt möglich. In der in Fig. 6 dargestellten Ausführungsform weist die Führung 32 Rippen 33 auf, die spiralförmig entlang des zylinderförmigen Umfangs der Führung 32 verlaufen, durch ihre spiralförmige Anordnung begünstigen sie die Rotationsbewegung des Schliesselements 3, sowie das Hindurchfördern der Schmutzpartikel durch das Rückschlagventil 1. Vorstellbar ist auch eine Kombination von gerade verlaufenden Führungsrippen 33 entlang der Führung 32 und Schaufeln 38 am Umfang im Bereich der Zone A 34, wie in Fig. 6 dargestellt.

**Bezugszeichenliste**

| | | | |
|---|---|---|---|
| 1 | Rückschlagventil | 31 | Strömungsleitelement |
| 2 | Ventilgehäuse | 32 | Führung Schliesselement |
| 3 | Schliesselement | 33 | Führungsrippe Schliesselement |
| 4 | Stützring | 34 | Zone A |
| 5 | Profildichtung | 35 | Zone B |
| 6 | Einschraubteil | 36 | Zone C |
| 7 | Dichtpartie | 37 | Auflagefläche Schliesselement |
| 8 | Durchflussrichtung | 38 | Schaufel |
| 9 | Rückflussrichtung | | |
| 10 | Lagerung | | |
| 11 | Rippe | | |
| 12 | Anschlagfläche | | |
| 13 | Stirnfläche | | |
| 14 | | | |
| 15 | Feder | | |
| 16 | Auflagefläche | | |
| 17 | | | |
| 18 | O-Ring | | |
| 19 | O-Ring | | |
| 20 | Überwurfmutter | | |
| 21 | Überwurfmutter | | |
| 22 | Anschlussteil | | |
| 23 | Anschlussteil | | |
| 24 | | | |

## Patentansprüche

1. Rückschlagventil (1) beinhaltend ein Ventilgehäuse (2), ein einteiliges Schliesselement (3) sowie eine Lagerung (10), wobei sich das Schliesselement (3) im Ventilgehäuse (2) befindet, das durch das Durchflussmedium verschiebbar angeordnet ist und in der Schliessstellung (3) an einer Profildichtung (5) einer Dichtpartie (7) anliegt, wobei das Schliesselement durch die Lagerung (10) geführt ist, wobei die Lagerung (10) in Form von Rippen (11) konzentrisch im Ventilgehäuse angeordnet und befestigt ist, wobei das Schliesselement (3) eine Zone A (34), in der die Aussenkontur eine strömungsoptimierte Form mit einem Radius in Front aufweist, und eine Zone B (35), in der die Aussenkontur eine Kalottenform aufweist, beinhaltet, wobei sich der Umfang bzw. der Durchmesser der Aussenkontur in Zone A (34) vergrössert bis Zone A (34) in Zone B (35) übergeht, wobei die Zone A (34) und die Zone B (35) hintereinander angeordnet sind und fliessend ineinander übergehen, **dadurch gekennzeichnet, dass** eine Zone C (36) durch einen Radius an Zone B (35) anschliesst, wobei der Radius gegen Zonenende in eine Gerade übergeht, die als Strömungsleitelement dient, wobei an Zone C (36) ein zylinderförmiger Schaft anschliesst, der als Führung (32) dient.

2. Rückschlagventil (1) nach Anspruch 1, **dadurch gekennzeichnet, dass** die Aussenkontur der Zone A (34) konusförmig ausgebildet ist.

3. Rückschlagventil (1) nach einem der Ansprüche 1 oder **dadurch gekennzeichnet, dass** dass die Aussenkontur der Zone A tangential in die Kalotte der Zone B (35) übergeht.

4. Rückschlagventil (1) nach einem der Ansprüche 1 bis 3, **dadurch gekennzeichnet, dass** das Schliesselement (3) eine Führung (32) aufweist welche formschlüssig geführt wird, so dass das Schliesselement (3) in Strömungsrichtung verschiebbar ist.

5. Rückschlagventil (1) nach Anspruch 4, **dadurch gekennzeichnet, dass** die Führung (32) mindestens drei Führungsrippen (33) aufweist.

6. Rückschlagventil (1) nach Anspruch 1, **dadurch gekennzeichnet, dass** die Lagerung (10) eine Auflagefläche (16) zur Auflage eines Rückstellelements, vorzugsweise einer Feder (15) aufweist.

7. Rückschlagventil (1) nach einem der Ansprüche 1 oder 6, **dadurch gekennzeichnet, dass** das bestehende Rückschlagventil (1) durch eine Feder (15) erweiterbar ist.

8. Rückschlagventil (1) nach einem der Ansprüche 6 oder 7, **dadurch gekennzeichnet dass** die Feder (15) eine Druckfeder ist.

9. Rückschlagventil (1) nach einem der Ansprüche 1 bis 3, **dadurch gekennzeichnet, dass** das Schliesselement (3) aus Kunststoff vorzugsweise PP, PVC, ABS, usw. gefertigt ist.

10. Rückschlagventil (1) nach einem der Ansprüche 1 bis 3, **dadurch gekennzeichnet, dass** entlang des Umfangs der Mantelfläche der Zone A (34) mindestens eine Schaufel (38) vorzugsweise spiralförmig zur Erzeugung der Rotation angeordnet ist.

11. Rückschlagventil (1) nach Anspruch 5, **dadurch gekennzeichnet, dass** die Führungsrippen (33) spiralförmig verlaufen.

## Claims

1. Check valve (1) comprising a valve housing (2), a one-piece closing element (3) and also a bearing (10), wherein the closing element (3) is present in the valve housing (2), which is arranged in such a way that same can be displaced by the flow medium and rests against a profile seal (5) of a sealing section (7) in the closed position (3), wherein the closing element is guided by the bearing (10), wherein the bearing (10) is arranged and fastened concentrically in the valve housing in the form of ribs (11), wherein the closing element (3) comprises a zone A (34), in which the outer contour comprises a flow-optimized shape having a radius at the front, and a zone B (35), in which the outer contour comprises a domed shape, wherein the circumference or the diameter of the outer contour in zone A (34) increases until zone A (34) merges into zone B (35), wherein the zone A (34) and the zone B (35) are arranged in series and merge smoothly into one another, **characterized in that** a zone C (36) adjoins zone B (35) by means of a radius, wherein the radius, toward the end of the zone, merges into a straight line that serves as a flow guiding element, wherein a cylindrical stem, that serves as a guide (32), adjoins zone C (36).

2. Check valve (1) according to Claim 1, **characterized in that** the outer contour of zone A (34) is of conical design.

3. Check valve (1) according to either of Claims 1 or 2, **characterized in that** the outer contour of zone A merges tangentially into the dome of zone B (35).

4. Check valve (1) according to one of Claims 1 to 3, **characterized in that** the closing element (3) has a guide (32), which is guided positively, allowing the closing element (3) to be moved in the flow direction.

5. Check valve (1) according to Claim 4, **characterized in that** the guide (32) has at least three guide ribs (33).

6. Check valve (1) according to Claim 1, **characterized in that** the bearing (10) has a supporting surface (16) for supporting a return element, preferably a spring (15).

7. Check valve (1) according to either of Claims 1 or 6, **characterized in that** the existing check valve (1) can be supplemented by a spring (15).

8. Check valve (1) according to either of Claims 6 or 7, **characterized in that** the spring (15) is a compression spring.

9. Check valve (1) according to one of Claims 1 to 3, **characterized in that** the closing element (3) is manufactured from plastic, preferably PP, PVC, ABS etc.

10. Check valve (1) according to one of Claims 1 to 3, **characterized in that** at least one blade (38) is arranged along the periphery of the circumferential surface of zone A (34), preferably in a spiral shape to produce rotation.

11. Check valve (1) according to Claim 5, **characterized in that** the guide ribs (33) extend in a spiral shape.

## Revendications

1. Soupape de retenue (1) contenant un boîtier de soupape (2), un élément de fermeture d'une seule pièce (3) ainsi qu'un support sur palier (10), l'élément de fermeture (3) se trouvant dans le boîtier de soupape (2), étant disposé de manière déplaçable par le milieu en circulation et s'appliquant dans la position de fermeture (3) contre un joint d'étanchéité profilé (5) d'une partie d'étanchéité (7), l'élément de fermeture étant guidé par le support sur palier (10), le support sur palier (10) étant disposé et fixé sous la forme de nervures (11) de manière concentrique dans le boîtier de soupape, l'élément de fermeture (3) présentant une zone A (34), dans laquelle le contour extérieur présente une forme optimisée en termes d'écoulement avec un rayon à l'avant, et une zone B (35) dans laquelle le contour extérieur présente une forme de calotte, la périphérie ou le diamètre du contour extérieur dans la zone A (34), augmenté(e) jusqu'à la zone A (34), se prolongeant par la zone B (35), la zone A (34) et la zone B (35) étant disposées l'une derrière l'autre et se prolongeant de manière fluide l'une dans l'autre, **caractérisée en ce qu'**une zone C (36) se raccorde par un rayon à la zone B (35), le rayon se prolongeant vers l'extrémité de la zone en une droite, qui sert d'élément de guidage de l'écoulement, une tige de forme cylindrique se raccordant à la zone C (36), laquelle tige sert de guide (32).

2. Soupape de retenue (1) selon la revendication 1, **caractérisée en ce que** le contour extérieur de la zone A (34) est réalisé sous forme conique.

3. Soupape de retenue (1) selon l'une quelconque des revendications 1 ou 2, **caractérisée en ce que** le contour extérieur de la zone A se prolonge tangentiellement dans la calotte de la zone B (35).

4. Soupape de retenue (1) selon l'une quelconque des revendications 1 à 3, **caractérisée en ce que** l'élément de fermeture (3) présente un guide (32) qui est guidé par engagement positif, de telle sorte que l'élément de fermeture (3) puisse être déplacé dans la direction d'écoulement.

5. Soupape de retenue (1) selon la revendication 4, **caractérisée en ce que** le guide (32) présente au moins trois nervures de guidage (33).

6. Soupape de retenue (1) selon la revendication 1, **caractérisée en ce que** le support sur palier (10) présente une surface d'appui (16) pour supporter un élément de rappel, de préférence un ressort (15).

7. Soupape de retenue (1) selon l'une quelconque des revendications 1 ou 6, **caractérisée en ce que** la soupape de retenue existante (1) peut être élargie par un ressort (15).

8. Soupape de retenue (1) selon l'une quelconque des revendications 6 ou 7, **caractérisée en ce que** le ressort (15) est un ressort de compression.

9. Soupape de retenue (1) selon l'une quelconque des revendications 1 à 3, **caractérisée en ce que** l'élément de fermeture (3) est fabriqué en plastique, de préférence en PP, PVC, ABS, etc.

10. Soupape de retenue (1) selon l'une quelconque des revendications 1 à 3, **caractérisée en ce qu'**au moins une pale (38) est disposée de préférence en forme de spirale le long de la périphérie de la surface d'enveloppe de la zone A (34) pour générer la rotation.

11. Soupape de retenue (1) selon la revendication 5, **caractérisée en ce que** les nervures de guidage (33) s'étendent en forme de spirale.
